# EUROPÄISCHE PATENTSCHRIFT

(11) **EP 1 243 466 B1**
(45) Veröffentlichungstag und Bekanntmachung des Hinweises auf die Patenterteilung: **22.10.2003**
(21) Anmeldenummer: 02006153.7
(22) Anmeldetag: 19.03.2002
(51) Int. Cl.: B60P 7/13

(54) **Transportsicherung für Frachtcontainer**
Securing of container during transport
Fixation de conteneur pendant le transport

(30) Priorität: 20.03.2001 DE 20104737 U; 30.11.2001 DE 20119415 U
(43) Veröffentlichungstag der Anmeldung: 25.09.2002
(73) Patentinhaber: Hamburger Patent Schmiede GmbH, 21079 Hamburg (DE)
(72) Erfinder: Metternich, Heinz Rüdiger, 21079 Hamburg (DE)
(74) Vertreter: DIEHL GLAESER HILTL & PARTNER

(56) Entgegenhaltungen:
- WO-A-00/51842
- DE-C- 19 718 528
- US-A- 3 892 436

## Beschreibung

Die vorliegende Erfindung bezieht sich auf eine Vorrichtung zum selektiven Hin- und Herbewegen von Antriebsteilen eines Mechanismus zum Anheben, Absenken und Drehen eines Verriegelungsbolzens zur Verriegelung mit einem Beschlag eines Containers vermittels einer Druckmittel betätigten Kolbenzylinderanordnung, sowie auf ein Verfahren zum selektiven Hin- und Herbewegen von Antriebsteilen eines Riegelmechanismus für die Transportsicherung eines Frachtcontainers auf einem druckmittelbetätigten Kolbenzylinderanordnung. Eine derartige Vorrichtung und ein derartiges verfahren sind bekannt (DE 197 18 528 C1). Die Erfindung bezieht sich insbesondere auf die Verriegelung von Containern auf Fahrzeugen, aufweisend einen Riegelbolzen, der in einem Verriegelungsgehäuse bewegbar gehaltert ist, und einen Antrieb, um den Riegelbolzen zwischen Freigabe- und Riegelstellung hin- und her zu bewegen, und zwar zur Verriegelung eines Containers auf der Ladefläche bzw. dem Chassis eines Fahrzeugs mit nach oben vorstehenden Verriegelungsteilen mit einem Beschlag eines Containers.

Es ist eine Vorrichtung bekannt (EP 0 051 107 B1) zum stirnseitigen Verriegeln von Containern an Fahrgestellen (Stirnverriegelung) bekannt, mit einem Riegelbolzen, der in einer Führung etwa parallel zur Längsachse des Fahrgestells zwischen einer Riegel- und einer Freigabestellung bewegbar und an einen in einer Halterung schwenkbaren Betätigungsgriff angekoppelt ist. Hierbei sind die Führung und Halterung gemeinsam an einer senkrecht zur Bewegungsebene des Betätigungsgriffes ausgerichteten Montageplatte fest angeordnet, wobei sich die Montageplatte auf derjenigen Seite der Führung befindet, die dem verriegelnden Teil des Riegelbolzens zugekehrt ist.

Wenn Container auf dem Chassis eines Fahrzeuges transportiert werden sollen, ist ein Verriegelungsvorgang nötig. Wesentlich ist hierbei, dass der Container zunächst an der richtigen Stelle auf das Chassis abgesetzt wird. Nunmehr muss eine Bedienungsperson von Hand einen Hebel umlegen, um den Verriegelungsteil in dem Langloch des

Beschlages für die Fahrt festzusetzen. Misslich ist hierbei, dass dieser Vorgang von Hand für jeden einzelnen der vier Eckbeschläge durchgeführt werden muss.

Es werden nun aber auch Fahrzeuge eingesetzt, die mit mehr als vier Verriegelungseinrichtungen ausgestattet sind, so dass unterschiedlich große Container aufgenommen werden können. Dies bedingt dann aber, dass die Verriegelungsbolzen gegenüber dem Chassis nicht vorstehen dürfen, sondern abgesenkt sein müssen, damit sie beim Aufnehmen eines Containers nicht stören und beschädigt werden können.

Die vorliegende Erfindung befasst sich insbesondere mit einer Vorrichtung der eingangs genannten Art, die geeignet ist, unter die Horizontalebene des Chassis eines Containerfahrzeuges abgesenkt zu werden.

Erreicht wird dies durch die in den Ansprüchen angegebenen Merkmale, und zwar bei der Vorrichtung dadurch dass auf der Kolbenstange des Druckmittelzylinders zwei teleskopierende Teile koaxial zur Kolbenstange angeordnet sind; eine innere zylinderförmig ausgebildete Stange auf der Kolbenstange drehfest angeordnet und am freien Ende entweder mit einem flanschartigem Vorsprung oder mit zwei nach oben und nach unten radial nach außen vorspringenden Teilen ausgebildet ist, mit dessen/deren Hilfe zum Druckmittelzylinder hin gerichtete Bewegungen, also Zugbewegungen ausführbar sind; dass ein äußeres die Stange umgebendes Rohr am freien Ende mit einem radial nach außen vorstehendem Vorsprung ausgebildet ist, mit dessen Hilfe vom Druckmittelzylinder weg gerichtete Bewegungen, also Druckbewegungen, ausführbar sind, und dass die Stange und das Rohr in zwei Drehstellungen zueinander in Eingriff bringbar sind, wobei in der einen der Vorsprung des Rohres sich oben und in der anderen sich unten befindet.

Für die Erfindung ist wesentlich, dass alle erforderlichen Bewegungen für das Verriegeln und das Entriegeln eines Containers und für das Absenken und Ausfahren der Verriegelungsteile aus einem einzigen translatorischen Antrieb hergeleitet werden. So wird mittels einer Einfahrbewegung der Kolbenstange ein mit ihr arbeitsmäßig verbundener Zugnocken durch translatorische Bewegung und über eine daraus abgeleitete Schwenkbewegung eines Drehhebels der Riegelmechanismus unter Einschluss des Riegelbolzens in die ausgefahrene Position angehoben und mittels einer folgenden Ausfahrbewegung der Kolbenstange ein mit ihr arbeitsmäßig verbundener Drucknocken um 180° verschwenkt und sodann wird durch translatorische Bewegung über eine Zahnstange und eine schiefe Ebene der Riegelbolzen um seine Achse um 90° gedreht und in die Spannposition bzw. Transportlage des Containers abgesenkt.

Weiterhin wird mittels einer Ausfahrbewegung der Kolbenstange ein mit ihr arbeitsmäßig verbundener Zugnocken durch translatorische Bewegung und über eine daraus abgeleitete Schwenkbewegung eines Drehhebels der Riegelmechanismus unter Einschluss des Riegelbolzens in die zurückgezonene Position abgesenkt und mittels einer folgenden Einfahrbewegung der Kolbenstange ein mit ihr arbeitsmäßig verbundener Drucknocken zunächst um 180° verschwenkt und sodann wird durch translatorische Bewegung über eine Zahnstange und eine schiefe Ebene der Riegelbolzen angehoben und um seine Achse um 90° gedreht.

Beider Vorrichtung Gemäß der Erfindung wird ein einziger Antrieb verwendet, der lediglich Linearbewegungen ausführt. Für einen solchen Antrieb kommen Pneumatik-Arbeitszylinder aber auch Membranspeicherantriebe in Frage, die in der Fahrzeugtechnik schon seit längerer Zeit im Zusammenhang mit dem Anlegen der Bremse Einsatz finden. Er erhält seine Energie über Pneumatikleitungen, wobei Druckluft dafür sorgt, dass der Antrieb stets in der Arbeitslage gehalten wird. Entweicht die Druckluft, so kehrt die Membran des Membranspeichers in die entlastete Lage zurück, was durch eine Feder bewerkstelligt wird. Beim Einsatz an einer Bremse dient dieser Membranspeicher dazu, die Bremsbacken von der Bremsscheibe fernzuhalten. Der Bremsvorgang wird durch Wegnahme des pneumatischen Drucks eingeleitet, so dass die Bremsbacken die Bremsscheibe umgreifen können, um das Fahrzeug abzubremsen.

Ein derartiger Membranspeicher kann bei der Vorrichtung gemäß der Erfindung eingesetzt werden, um über einen keilförmigen Steuerteil die gewünschten Bewegungen für das Einführen des Riegelteils in das Langloch eines Beschlags herzuleiten. Die Drehbewegung wird ebenfalls von diesem Antrieb bewältigt, jedoch dient hierzu ein Hebel am Riegelteil und eine Zahnstange am Steuerteil.

Es ist ersichtlich, dass durch einfache Hin- und Herbewegung des Steuerteils alle erforderlichen Bewegungen durchgeführt werden können. Die einzelnen Bewegungen werden über zueinander komplementär ausgebildete Flächen, vorzugsweise ebene Keilflächen und Zahnflächen ausgeführt, so dass insgesamt ein Mechanismus entstanden ist, der mit einfachsten mechanischen Mitteln die erforderlichen gesteuerten Bewegungen ausführt, ohne dass Schwierigkeiten in der rauhen Praxis des Containertransportes zu befürchten sind.

Ein Fahrzeug, das mit den entsprechenden Verriegelungsmechanismen ausgebildet ist, kann in einfachster Weise eingesetzt werden, um einen Container auf der Ladefläche des Chassis betriebssicher zu verriegeln. Hat der Container die vorgesehene Lage erreicht, so wird Druckmittel angelegt und die erforderlichen Bewegungen für die Verriegelung werden durchgeführt, ohne dass weitere Handgriffe erforderlich sind.

Ausgehend von den translatorisch hin- und herbeweglichen vorspringenden Teilen werden den Verriegelungsteilen nicht nur hin- und hergehende Bewegungen sondern auch Anheb- und Absenkbewegungen und Drehbewegungen erteilt. Es handelt es sich vorzugsweise um einen pilzförmigen Verriegelungsteil zur Halterung von Containern auf Transportfahrzeugen, wobei all diese Vorgänge selbsttätig ohne einen Handschlag ausgeführt werden.

Die Betätigung kann auch vom Fahrerhaus drahtgebunden durchgeführt werden. Selbstverständlich sind auch andere Übertragungsmöglichkeiten, wie die elektromagnetische oder Infrarotübertragung von Signalen, hierzu geeignet.

Es besteht die Möglichkeit, die Endlagen des hin- und herbeweglichen Steuerteils abzufühlen und dieses an das Fahrerhaus weiterzuleiten, damit dort die Möglichkeit besteht, die einzelnen Arbeitsvorgänge zu überwachen.

Die Erfindung wird nachstehend anhand der Zeichnungen beispielsweise erläutert:
- Fig. 1: zeigt in schaubildlicher Ansicht von rechts her gesehen einen Mechanismus zum Verriegeln eines Containers an einem Fahrzeug, wobei derjenige Zustand gezeigt ist, in welchem der Verriegelungsbolzen sich in abgesenkter Lage befindet, also nicht über die Transportebene des aufnehmenden Fahrzeugs hinaus vorsteht.
- Fig. 2: zeigt in schaubildlicher Ansicht von rechts her gesehen einen Mechanismus zum Verriegeln eines Containers an einem Fahrzeug, wobei der Mechanismus in einer Lage wiedergegeben ist, in welcher der Verriegelungsbolzen und zugehörige Teile nach oben hin ausgefahren sind.
- Fig. 3: zeigt in schaubildlicher Ansicht von rechts her gesehen einen Mechanismus zum Verriegeln eines Containers an einem Fahrzeug, wobei der Verriegelungsbolzen um seine Längsachse um 90° gedreht gezeigt ist, um in dieser Lage einen nicht gezeigten Container für den Transport zu haltern.
- Fig. 4: zeigt in schaubildlicher Ansicht von links her gesehen einen Mechanismus zum Verriegeln eines Containers an einem Fahrzeug, wobei die Ansicht die Situation wiedergibt kurz vor dem Verriegeln eines Beschlages bzw. kurz nach dem Entriegeln eines Beschlages eines nicht gezeigten Containers.
- Fig. 5: zeigt die schaubildliche Lage der teleskopierenden Teile des Mechanismus nach den Figuren 1 bis 3 in einer ersten Eingriffslage.
- Fig. 6: zeigt die schaubildliche Lage der teleskopierenden Teile nach Fig. 5 in der anderen Eingriffslage.
- Fig. 7: zeigt eine Draufsicht auf eine Spiralhülse im Inneren der teleskopierenden Teile.
- Fig. 8: zeigt eine Draufsicht auf die Spiralhülse nach Fig. 7, jedoch um 90° verschwenkt.
- Fig. 9: zeigt in verändertem Maßstab die in den vorangehenden Figuren beschriebenen Teile, jedoch von der gegenüberliegenden Seite her betrachtet, und lässt einen Sperrmechanismus erkennen, der bei Druckluftabfall wirksam wird.

Der Mechanismus zur Verriegelung eines Containers auf einem Chassis weist im Wesentlichen einen pilzförmigen Verriegelungsbolzen 21 auf, der in der herkömmlichen Art und Weise ausgestaltet ist. Er ist in seinen Abmessungen so dimensioniert, dass er in den Beschlag eines Containers von unten her eingeführt, dort um 90° gedreht und wiederum in Spannlage abgesenkt werden kann. Auf diese Art und Weise stellt er eine transportsichere Verbindung zwischen dem Beschlag des Containers und dem zugehörigen Chassis eines Fahrzeuges her.

Der Verriegelungsbolzen 21 stützt sich auf zwei Stützteile 20 ab, und auch hierbei handelt es sich um bekannte Teile einer Verriegelung.

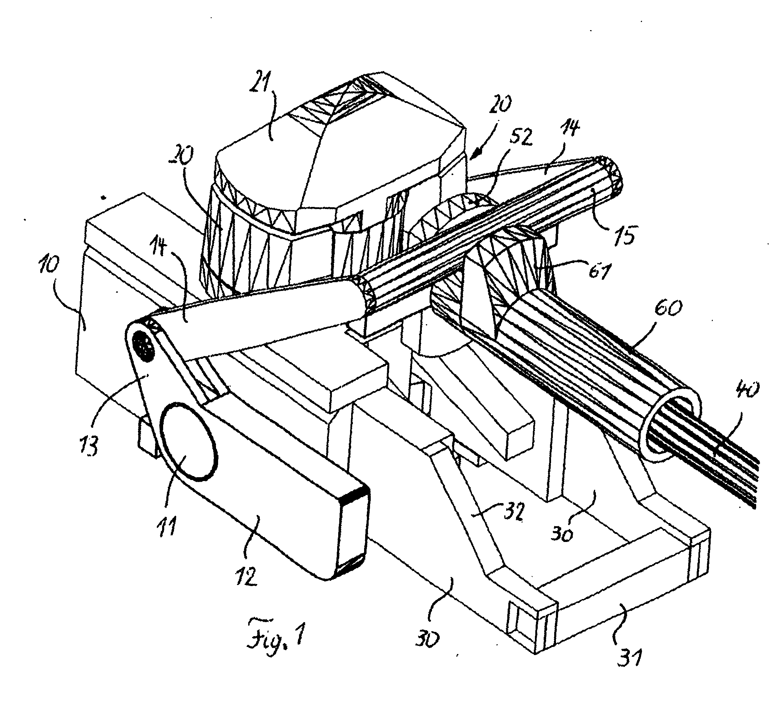

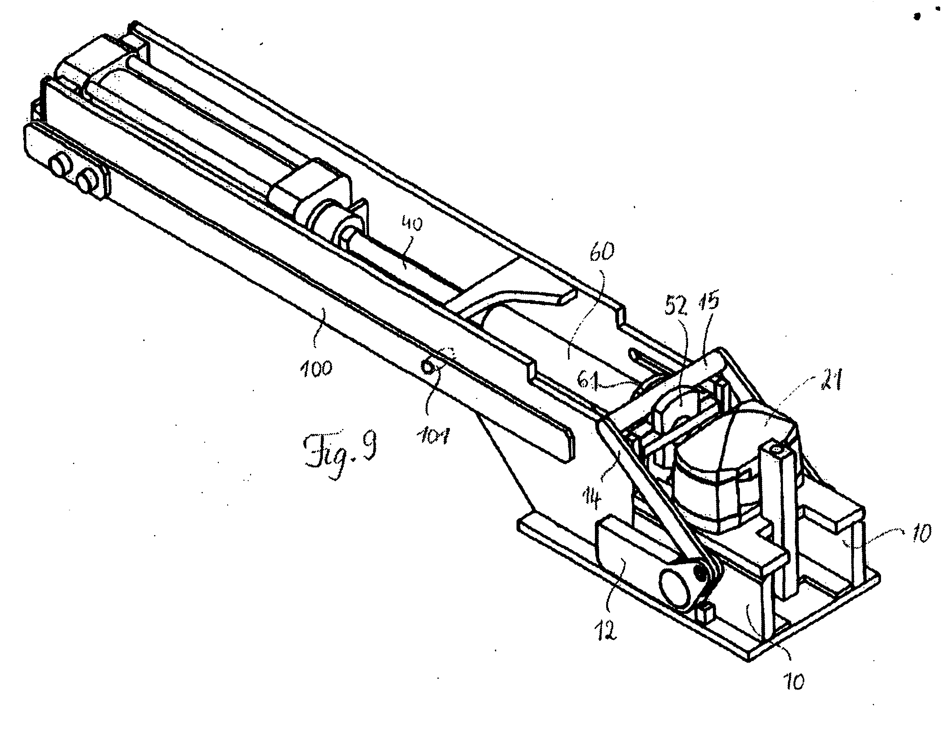

Der in den Figuren gezeigte Mechanismus gemäß der Erfindung stellt sicher, dass Verriegelungsbewegungen des Verriegelungsbolzens 21 ausgeführt werden können. Im Zusammenhang mit der vorliegenden Erfindung sind jedoch zwei weitere Merkmale von besonderer Bedeutung, nämlich der Verriegelungsbolzen 21 kann zusammen mit seinen beiden Stützteilen 20 so abgesenkt werden, dass er mit seiner oberen Erstreckung nicht über die Ladeebene des Chassis hinaus vorsteht. Weiterhin wird der Verriegelungsbolzen 21 mittels einer Kolbenstange 40 einer Kolbenzylinderanordnung (in den Fig. 1 bis 8 nicht gezeigt, in Fig. 9 zu erkennen) betätigt, wobei all seine Bewegungen, wie sie vorangehend beschrieben worden sind, und auch der Absenkvorgang aus einer im wesentlichen hin- und hergehenden Bewegung der Kolbenstange 40 hergeleitet werden.

In Fig. 1 ist der Mechanismus in der abgesenkten Lage gezeigt und diese Lage ist dadurch gekennzeichnet, dass Seitenwände 10 und Abstützhebelarme 12 des Mechanismus mit ihren jeweils unteren Flächen gemeinsam auf einer nicht gezeigten Auflage unterhalb der Transportebene des Fahrzeuges aufruhen. Der Mechanismus weist weitere Teile 10 und 12 verdeckt liegend auf seiner anderen Seite auf.

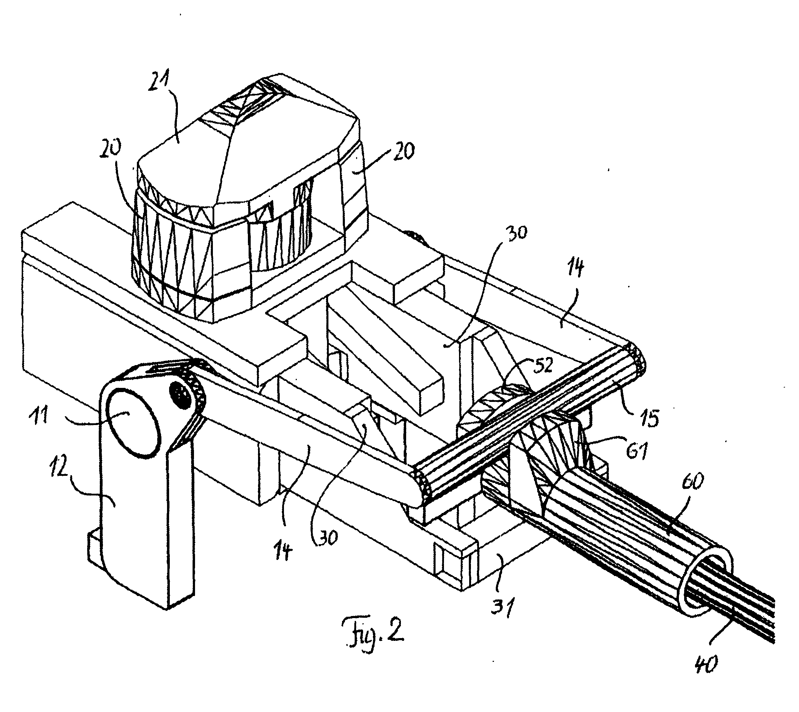

Die Fig. 2 zeigt diejenige Lage, in der die Teile 10 und 12 in ihrer angehobenen Lage angeordnet sind, weil nämlich der Abstützhebelarm 12 um 90° verdreht ist, so dass er auf der nicht gezeigten Unterlage mit seiner nach unten weisenden Fläche aufruht und an einem Anschlag anliegt. Diese Lage ist so dimensioniert, dass der Verriegelungsbolzen 21 mit seinen Stützteilen 20 über die nicht gezeigte Transportebene des Chassis hinaus nach oben vorsteht.

In den Figuren ist zu sehen, dass jeweils an der Seitenwand 10 ein Zapfen 11 befestigt ist, auf welchem der Hebel 12 verschwenkbar angeordnet ist. Der Hebel 12 ist mit einem im Winkel von etwa 90° angeordneten Lenker 14 verschwenkbar verbunden. Das freie Ende des Lenkers 14 ist mit einer sich in Querrichtung erstreckenden Schubstange 15 verbunden. In entsprechender Weise ist an dem andere Ende der Schubstange 15 ein Lenker 14 mit einem weiteren Schwenkhebelarm 13 sowie einem Zapfen 11 an einer Seitenwand 10 befestigt, die allerdings in der Fig. 1 und 2 nicht zu erkennen sind.

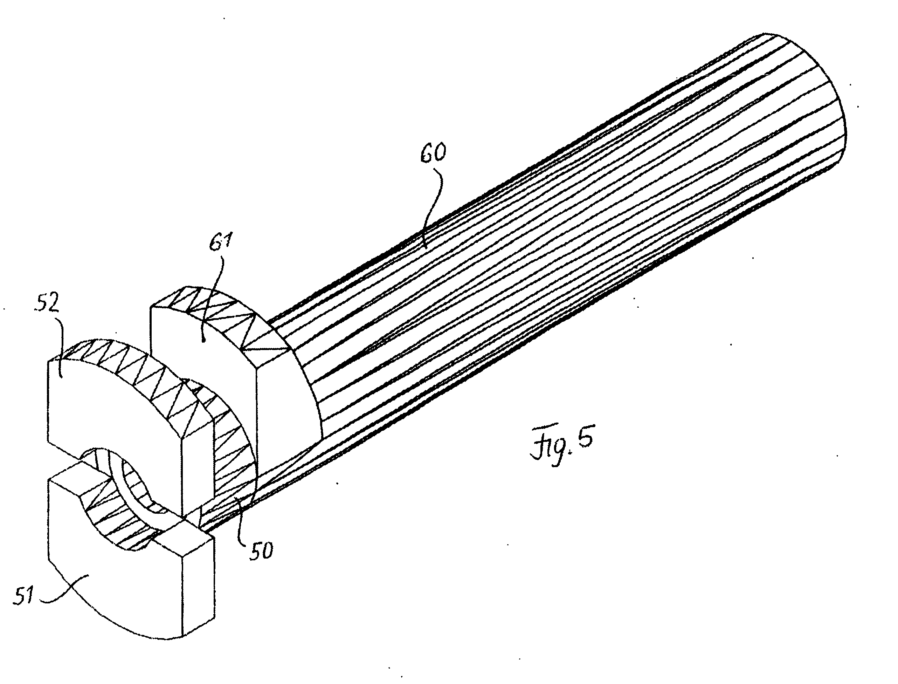

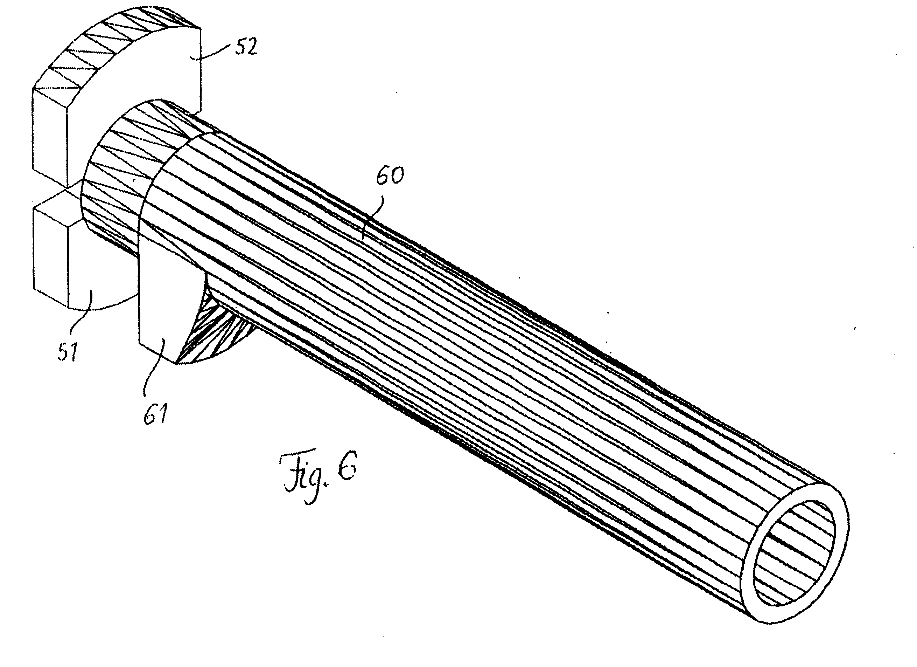

Die Schubstange 15 liegt gemäß Fig. 1 zwischen einem oberen Vorsprung oder Zugnocken 52 einer Stange 40 und einem weiteren Vorsprung oder Drucknocken 61 eines Rohres 60. Die entsprechende Positon der Nocken ist auch in Fig. 5 zu erkennen. Es ist dort gezeigt, wie am freien Ende der hohlen Stange 50 der nach oben gerichtete Vorsprung 52 und ein nach unten vorstehender Vorsprung 51 vorhanden ist. Das äußere Rohr 60 ist nur mit dem Vorsprung 61 ausgestattet, der in Fig. 5 nach oben weist und in Fig. 6 nach unten weist, der also nicht nur hin- und herbewegbar, sondern auch um die Rohrachse verschwenkbar ist.

Die Stange 50 und das Rohr 60 sind zueinander teleskopierend angeordnet und sind mit der Kolbenstange 40 verbunden, so dass die Vorsprünge 51, 52 und 61 die Bewegungen der Kolbenstange 40 mitmachen, wenn diese aus der Kolbenzylinderanordnung heraus- bzw. hineinfährt. Dies wird nachfolgend noch beschrieben werden.

In den Figuren 1 bis 3 sind weiterhin noch zwei in Längsrichtung ausgerichtete Schubteile 30 gezeigt, welche über eine quer gerichtete Schubstange 31 zu einer Einheit miteinander verbunden sind. Die Schubstange 31 und damit auch die Schubteile 30 können hin- und herbewegt werden und wirken dabei am unteren Ende auf den Verriegelungsbolzen 21 an, so wie dies beispielsweise in der WO 00/51842 beschrieben worden ist, so dass dieser Drehbewegungen um seine Längsachse ausführt. An dem Schubteil 30 ist dementsprechend ein Zahnstangenteil und eine schiefe Ebene ausgebildet, so dass durch Hin- und Herbewegungen des Schubteils 30 dem Verriegelungsbolzen 21 eine nach oben gerichtete axiale Bewegung, aber auch eine Drehbewegung um seine Achse im Bereich von 90° erteilt werden kann.

In Fig. 1 ist die Ausgangslage gezeigt, d.h. der Verriegelungsbolzen 21 ist eingefahren und der Mechanismus, d.h. die Teile 10 bis 13, 30 und 31 befinden sich in der unteren Lage, also der Absenklage.

Wird nun der Kolbenstange 40 eine nach rechts (Fig. 1 bis 3) gerichtete Bewegung erteilt, also eine Einwärtsbewegung, so nimmt der Vorsprung 52 der Stange 50 die Schubstange 15 mit, so dass der Abstützhebelarm 12 bei Blickrichtung der Fig. 1 in Uhrzeigerrichtung um ca. 90° verschwenkt wird. Der Abstützhebelarm 12 stützt sich nun auf der nicht gezeigten Unterlage ab, so dass zwangsläufig die bereits erwähnten Teile angehoben werden. Am Ende dieses Bewegungsvorganges der Kolbenstange 40 nehmen die Teile die in Fig. 2 gezeigte Lage ein, d.h. der Verriegelungsbolzen 21 zusammen mit seinen Stützteilen 20 hat die angehobene Lage erreicht, so dass die Teile 21, 20 über die Transportebene des Fahrzeuges hinaus vorstehen, wobei der Verriegelungsbolzen 21 und die Stützteile 20 in den Innenraum eines Containerbeschlages hineinragen, wenn ein Container auf das Chassis aufgesetzt worden ist.

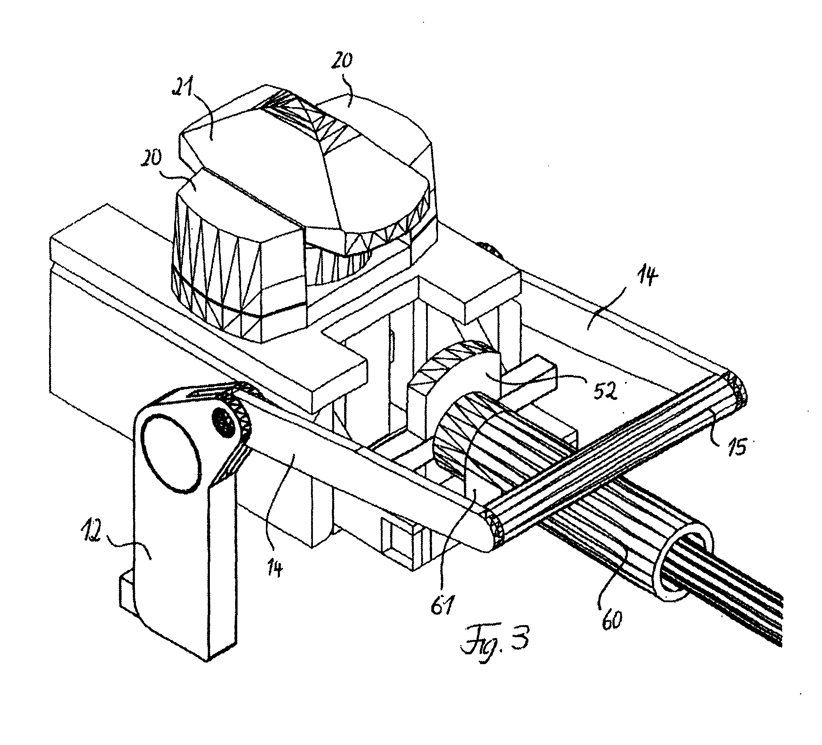

Führt nun die Kolbenstange 40 eine weitere nach außen gerichtete, also von rechts nach links gerichtete Bewegung (Fig. 1 bis 3) und eine weitere umgekehrte Bewegung durch, so führt dies zu einer Drehbewegung des Vorsprunges 61 bzw. des Rohres 60 um die Achse um 180°, so dass der nach unten gerichtete Vorsprung 61 des Rohres 60 (Lage der Fig. 6) mit der Schubstange 31 (Fig. 2) in Eingriff treten kann. Bei einer weiteren Bewegung der Kolbenstange 40 von rechts nach links, also einer Ausfahrbewegung, nimmt der Vorsprung 61 die Schubstange 31 mit und führt die Schubteile 30 von rechts nach links. Hierdurch wird die bereits erwähnte Anhebebewegung des Verriegelungsbolzens 20 und die Drehbewegung um seine Achse ausgeführt, so dass am Ende dieses Vorganges der Verriegelungsbolzen 21 die in Fig. 3 gezeigte Lage einnimmt. Befindet sich also der Verriegelungsbolzen 21 im Inneren eines Beschlages eines Containers, so kann er den Beschlag und damit den zugehörigen Container (beide nicht gezeigt) festlegen. Die in Fig. 3 gezeigten Teile befinden sich in der Transportlage.

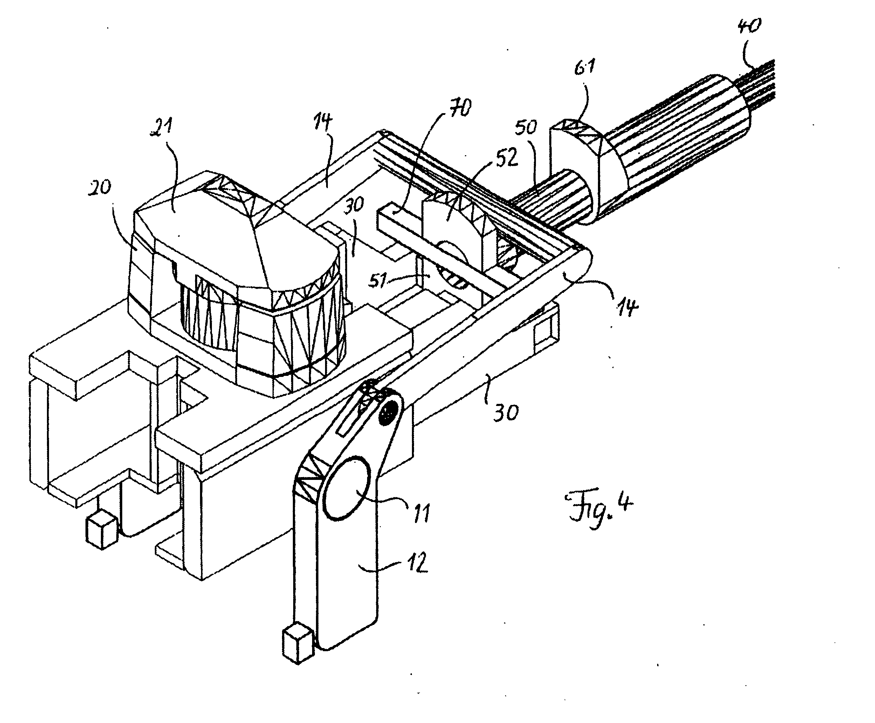

Wird nun eine nach rechts (Fig. 3) gerichtete Bewegung der Kolbenstange 40 eingeleitet, so finden die entsprechenden Vorgänge in umgekehrtem Sinne statt, d.h. der Verriegelungsbolzen 21 wird angehoben und um seine Achse gedreht, so dass er am Ende dieses Hubes der Kolbenstange 40 die in Fig. 4 gezeigte Lage einnimmt. Der nicht gezeigte Container könnte nun also angehoben werden, da sein Beschlag vom Verriegelungsbolzen 21 freigekommen ist.

In der in Fig. 4 gezeigten Lage ist durch weitere translatorische Bewegungen der Kolbenstange 40 bereits das Rohr 60 wieder um seine Achse um 180° gedreht worden, so dass der Vorsprung 61 wieder die obere Lage einnimmt. Eine weitergehende Bewegung der Kolbenstange 40 in Ausfahrtrichtung (nach rechts, Fig. 4), ausgehend von der in Fig. 4 dargestellten Lage, führt zu einer Zurückverschwenkung des Hebelarmes 12 und damit zu einem Absenkvorgang, der wiederum in der Fig. 1 gezeigten Lage seine Endstellung angenommen hat.

In Fig. 4 ist noch ein Führungsteil 70 zu erkennen, der zwischen den Vorsprüngen 51 und 52 der Stange 50 befestigt ist und auf Führungen 32 auf den Schubteilen 30 geführt wird.

Es ist zu erkennen, dass im wesentlichen aus Hin- und Herbewegungen der Kolbenstange 40 alle Schwenk-, Anhebe- und Drehbewegungen der funktionellen Teile des Riegelmechanismus hergeleitet werden.

In der vorangehenden Beschreibung ist erwähnt worden, dass der Vorsprung 61 des Rohres 60 relativ zur Stange 50 und deren Vorsprüngen 51 und 52 um 180° verschwenkt werden kann. Die beiden teleskopierenden Teile 50 und 60 können also nicht nur axiale Bewegungen ausführen, sie sind darüber hinaus auch in der Lage, relative Drehbbewegungen um die eigene Achse durchzuführen, und zwar einfach durch Bewegungen der mit der Stange 50 verbundenen Kolbenstange 40.

Eine derartige Bewegungsumsetzung lässt sich dadurch bewerkstelligen, dass an einem der Teile 50 und 60 innen eine gewendelte Spur vorhanden ist, die wiederum durch einen komplementären Abfühlteil an dem anderen Teil 60 oder 50 abgefühlt wird, beispielsweise durch zwei zu einander komplementär ausgebildete Spuren oder durch ein sich über den Umfang erstreckendes Langloch, welches mit Hilfe eines Radialzapfens abgefühlt wird.

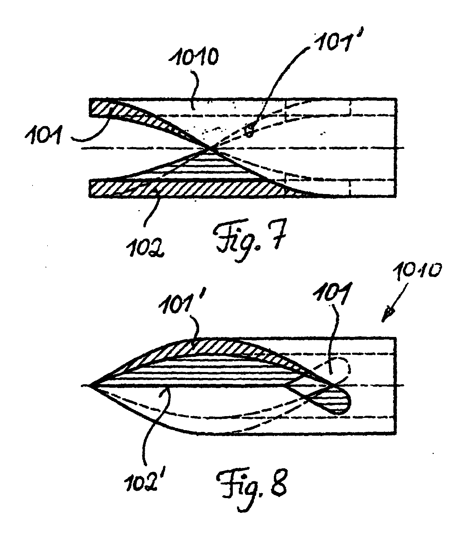

In den Figuren 7 und 8 sind Draufsichten auf ein Rohrstück 1010 gezeigt, welches eingesetzt wird, um die Schwenkbewegung des Vorsprunges 61 des Rohres 60 relativ zu den Vorsprüngen 52 und 51 der Stange 50 zu bewerkstelligen.

Die Fig. 7 zeigt das Rohrstück 1010 mit einer gewendelten Spur 101, die sich um 180° über den Umfang des Rohrstückes 1010 erstreckt. Die Spur 101 endet im rechten unteren Teil des in Fig. 7 gezeigten Rohrstückes 1010 und hat im Endbereich die Form eines Langloches, so wie dies mit 101 in Fig. 8 in unterbrochenen Linien gezeigt ist.

Mit 102 ist eine axial verlaufende Kante mit ebener Fläche bezeichnet, die in gewisser Weise die gegenüber liegende Begrenzung zur Spur 101 darstellt.

Das Rohrstück 1010 ist mit zwei entsprechend ausgestalteten Spuren 101 und 102 ausgestattet, und zwar jeweils um 180° versetzt, was in Fig. 7 durch 101' angedeutet ist.

Bei Betrachtung der Fig. 8, die die Hülse 1010 in einer Lage um 90° verdreht zeigt, ist die Kante 102' zu erkennen und auch die über den Umfang gewölbte Ausgestaltung der Spur 101'.

Verwendet man nun zwei derartige in den Fig. 7 und 8 gezeigte Hülsen und setzt diese beiden bei Betrachtung der Fig. 7 und 8 axial ausgerichtet, aber spiegelbildlich zusammen, so ist ersichtlich, dass diese beiden Hülsen zwei Relativlagen zueinander einnehmen können, die um 180° zueinander verschwenkt sind.

Die beiden Hülsen können diese Drehpositionen nacheinander einnehmen, indem sie axial zueinander bewegt werden, wobei die miteinander eingreifenden Spuren 102 und 102' der beiden gegenüber liegenden Hülsen diese axiale Bewegung sicherstellen. Kommen die beiden Spuren 102 und 102' in axialer Richtung voneinander frei, so können die Spuren 101 und 101' bei einer Rückwärtsbewegung miteinander in Eingriff treten und bei einer weiteren axialen Bewegung führen die beiden Hülsen zusätzlich eine Drehbewegung um ihre Achse aus. Ein solcher Mechanismus wird nun eingesetzt, um aus axialen Bewegungen des Rohres 60 Schwenkbewegungen des Nockens 61 herzuleiten.

Wesentliche Teile des Riegelmechanismus sind nebem dem Riegelbolzen 21 die Keilschitten 30 und 32.

Der Riegelbolzen 21 ist in seinem unteren Teil mit einem Ritzel ausgebildet, und es ist ersichtlich, wenn in diesem Ritzel ein Zahnrad oder eine Zahnstange kämmt, der Riegelbolzen eine Drehbewegung durchführt.

Weiterhin ist der Riegelbolzen 21 in seinem unteren Teil mit einer Rampe ausgebildet, die in Bezug auf die Außenoberfläche des Riegelbolzens tangential verläuft. Es ist ersichtlich, dass wenn auf diese Rampe eingewirkt wird, der Riegelbolzen axiale Bewegungen ausführt.

Der Riegelbolzen 21 kann diese geschilderten Bewegungen durchführen, wenn er entsprechend axial und radial gelagert ist, wobei er die axialen Bewegungen durchführt, ohne hierbei den Eingriff der Zahnstange im Ritzel zu tangieren.

Fig. 9 lässt die bereits beschriebene Vorrichtung aus einer anderen Sicht erkennen, zeigt sozusagen in die andere Seite der in den Figuren 1 bis 4 gezeigten Vorrichtung.

In Fig. 9 ist ein Federteil 100 zu erkennen, der sich in Längsrichtung erstreckt und im Bereich des Antriebs ebenfalls am Gehäuse befestigt ist. Der frei vorstehende Teil ist bei 101 mit einer Art Bolzen oder Stift versehen und dieser ragt in den Weg sich beim Spannen bewegender Teile des Riegelmechanismus hinein. Dies bedingt dann, dass bei Druckausfall die einzelnen Teile des Riegelmechanismus beispielsweise nicht aus der Spannlage, der Transportlage eines Containers, herausgelangen können. Bewegt sich der Drucknocken 61 aus dieser Spannlage heraus, und zwar unter dem Einfluss des Druckmittels, so kann er den entsprechend ausgestalteten Bolzen 101 seitlich wegdrücken, bei Blickrichtung der Fg. 9 nach links vorn, so dass der weitere Bewegungsweg für den Drucknocken 61 freigegeben wird.

## Patentansprüche

1. Vorrichtung zum selektiven Hin- und Herbewegen von Antriebsteilen eines Mechanismus zum Anheben, Absenken und Drehen eines Verriegelungsbolzens zur Verriegelung mit einem Beschlag eines Containers vermittels einer Druckmittel betätigten Kolbenzylinderanordnung, **dadurch gekennzeichnet, dass** auf der Kolbenstange (40) des Druckmittelzylinders zwei teleskopierende Teile (50, 60) koaxial zur Kolbenstange (40) angeordnet sind; eine innere zylinderförmig ausgebildete Stange (50) auf der Kolbenstange (40) drehfest angeordnet und am freien Ende entweder mit einem flanschartigem Vorsprung oder mit zwei nach oben und nach unten radial nach außen vorspringenden Teilen (51, 52) ausgebildet ist, mit dessen/deren Hilfe zum Druckmittelzylinder hin gerichtete Bewegungen, also Zugbewegungen ausführbar sind; dass ein äußeres die Stange (50) umgebendes Rohr (60) am freien Ende mit einem radial nach außen vorstehendem Vorsprung (61) ausgebildet ist, mit dessen Hilfe vom Druckmittelzylinder weg gerichtete Bewegungen, also Druckbewegungen, ausführbar sind; und dass die Stange (50) und das Rohr (60) in zwei Drehstellungen zueinander in Eingriff bringbar sind, wobei in der einen der Vorsprung (61) des Rohres (60) sich oben und in der anderen sich unten befindet.

2. Verfahren zum selektiven Hin- und Herbewegen von Antriebsteilen eines Riegelmechanismus für die Transportsicherung eines Frachtcontainers auf einem Chassis eines Fahrzeuges vermittels einer druckmittelbetätigten Kolbenzylinderanordnung (40), **dadurch gekennzeichnet, dass** mittels einer Einfahrbewegung der Kolbenstange (40) ein mit ihr arbeitsmäßig verbundener Zugnocken (52) durch translatorische Bewegung und über eine daraus abgeleitete Schwenkbewegung eines Drehhebels (12,14) den Riegelmechanismus unter Einschluss des Riegelbolzens (21) in die ausgefahrene Position anhebt und dass mittels einer folgenden Ausfahrbewegung der Kolbenstange (50) ein mit ihr arbeitsmäßig verbundener Drucknocken (61) zunächst den Drucknocken um 180° verschwenkt und sodann durch translatorische Bewegung über eine Zahnstange und eine schiefe Ebene den Riegelbolzen (21) um seine Achse um 90° dreht und in die Spannposition bzw. Transportlage des Containers absenkt.

3. Verfahren nach Anspruch 2, **dadurch gekennzeichnet, dass** mittels einer Einfahrbewegung der Kolbenstange (40) der mit ihr arbeitsmäßig verbundene Zugnocken (52) durch translatorische Bewegung über die schiefe Ebene und die zahnstange den Riegelbolzen (21) anhebt und um 90° um seine Achse dreht, und dass mittels einer weiteren Einfahrbewegung der Kolbenstange (40) der mit ihr arbeitsmäßig verbundene Drucknocken (61) zunächst den Drucknocken um 180° verschwenkt und sodann durch eine folgende Ausfahrbewegung über eine daraus abgeleitete Schwenkbewegung des Drehhebels (12,14) der Riegelmechanismus unter Einschluss des Riegelbolzens (21) in die eingefahrene Position abgesenkt wird.

## Claims

1. Device for selective reciprocating movement of driving parts of a mechanism for lifting, lowering and turning of a locking bolt for locking with a fitting of a container by means of a piston cylinder arrangement actuating pressure means, **characterised in that** two telescoping parts (50, 60) are arranged on the piston rod of the pressure cylinder coaxial to the piston rod (40); that an inner cylindrically formed rod (50) is torsion-free arranged on the piston rod (40) and is formed at the free end either with a flange-like projection or with two parts (51, 52) projecting upwards and downwards radially towards the outside, by means of which movements directed towards the pressure cylinder, that is pulling movements, can be carried out; that a tube (60) surrounding the rod (50) is formed at the free end with a projection (61) projecting radially outwards, by means of which movements, directed away from the pressure cylinder, that is pushing movements, can be carried out; and that the rod (50) and the tube (60) are engageable in two rotational positions, wherein the projection (61) of the tube (60) is situated at the top in one of these positions and at the bottom in the other one.

2. Method for selective reciprocating movement of driving parts of a locking mechanisms for the securing of a freight container during transport on a chassis of a vehicle by means of a piston cylinder arrangement (40) actuated by pressure means, **characterised in that** by means of a retracting movement of the piston rod (40) a pulling cam (52) operationally connected therewith lifts the locking mechanisms including the locking bolt (21) to the extended position by a translatory movement and through a rotating movement derived therefrom of a turning lever (12, 14), and that by means of a subsequent extension movement of the piston rod (50) a pushing cam (61) operationally connected therewith turns the pushing cam by 180° at first and then rotates the locking bolt (21) around its axis by 90° by a translatory movement across a toothed rack and an inclined plane and lowers it to the engaged position or transport position of the container.

3. Method according to claims 2, **characterised in that** by means of a retracting movement of the piston rod (40) the pulling cam (52) operationally connected therewith lifts the locking bolt (21) by translatory movement across the inclined plane and the toothed rack and turns it by 90° around its axis, and that by means of a further retracting movement of the piston rod (40) the pushing cam (61) operationally connected therewith turns the pushing cam by 180° at first and the locking mechanism including the locking bolt (21) is lowered to the retracted position by a subsequent extension movement through a rotating movement derived therefrom of the turning lever (12, 14).

## Revendications

1. Dispositif pour imprimer un mouvement sélectif de va-et-vient à des éléments d'entraînement d'un mécanisme pour relever, abaisser et tourner un loquet de verrouillage pour assurer un verrouillage avec une ferrure d'un conteneur à l'aide d'une unité à cylindre et piston actionné par un fluide sous pression, **caractérisé en ce que** deux pièces télescopiques (50, 60) sont disposées en position coaxiale par rapport à la tige de piston (40) sur la tige de piston (40) du vérin actionné par un fluide sous pression, **en ce qu'**une tige intérieure (50) réalisée en forme de cylindre est disposée en solidarité de rotation sur la tige de piston (40) et est configurée à son extrémité libre soit avec une avancée en forme de collet soit avec deux pièces (51, 52) s'avançant vers le haut et vers le bas dans le sens radial en direction de l'extérieur, à l'aide de laquelle/desquelles peuvent être réalisés des mouvements dirigés vers le vérin actionné par un fluide sous pression, donc des mouvements de traction, **en ce qu'**un tube extérieur (60) entourant la tige (50) est configuré à l'extrémité libre avec une avancée (61) s'avançant dans le sens radial vers l'extérieur, à l'aide de laquelle peuvent être réalisés des mouvements dirigés à l'opposé vérin actionné par un fluide sous pression, donc des mouvements de poussée, et **en ce que** la tige (50) et le tube (60) peuvent être amenés en prise réciproque dans deux positions de rotation, l'avancée (61) du tube (60) se trouvant en haut dans l'une de ces positions et en bas dans l'autre de ces positions.

2. Procédé pour imprimer un mouvement sélectif de va-et-vient à des éléments d'entraînement d'un mécanisme à verrou pour réaliser un amarrage de transport d'un conteneur de fret sur un châssis d'un véhicule à l'aide d'une unité à cylindre et piston (40) actionné par un fluide sous pression, **caractérisé en ce qu'**à l'aide d'un mouvement de rentrée de la tige de piston (40), une came de traction (52) faisant l'objet d'une liaison opérationnelle avec elle relève, au moyen d'un mouvement de translation et par l'intermédiaire d'un mouvement de pivotement d'un levier tournant (12, 14) qui en résulte, le mécanisme à verrou y compris le loquet de verrou (21) dans la position sortie et **en ce qu'**à l'aide d'un mouvement de sortie ultérieur de la tige de piston (50), une came de poussée (61) faisant l'objet d'une liaison opérationnelle avec elle fait d'abord pivoter la came de poussée de 180° et tourne ensuite de 90° autour de son axe le loquet de verrou (21) au moyen d'un mouvement de translation par l'intermédiaire d'une crémaillère et d'un plan incliné et l'abaisse dans la position de mise en tension du conteneur ou dans sa position de transport.

3. Procédé selon la revendication 2, **caractérisé en ce qu'**à l'aide d'un mouvement de rentrée de la tige de piston (40), la came de traction (52) faisant l'objet d'une liaison opérationnelle avec elle relève, au moyen d'un mouvement de translation par l'intermédiaire du plan incliné et de la crémaillère, le loquet de verrou (21) et le tourne de 90° autour de son axe et **en ce qu'**à l'aide d'un autre mouvement de rentrée de la tige de piston (40), la came de poussée (61) faisant l'objet d'une liaison opérationnelle avec elle fait d'abord pivoter la came de poussée de 180° et qu'ensuite, par un mouvement de sortie ultérieur par l'intermédiaire d'un mouvement de pivotement du levier tournant (12, 14) qui en résulte, le mécanisme à verrou y compris le loquet de verrou (21) est abaissé dans la position rentrée.
